Europäisches Patentamt

European Patent Office

Office européen des brevets

(11) Publication number : **0 480 601 A1**

# EUROPEAN PATENT APPLICATION

(21) Application number : **91308774.8**

(22) Date of filing : **26.09.91**

(51) Int. Cl.$^5$ : **G01G 21/23,** G01G 19/02, G01G 21/06

(30) Priority : **29.09.90 GB 9021258**

(43) Date of publication of application :
**15.04.92 Bulletin 92/16**

(84) Designated Contracting States :
**AT BE CH DE DK ES FR GB GR IT LI LU NL SE**

(71) Applicant : **SHERING WEIGHING LIMITED**
**Pitreavie Business Park**
**Dunfermline, Fife KY11 5PU, Scotland (GB)**

(72) Inventor : **Bannister, Stephen Lawrence**
**232 Baberton Mains Drive**
**Edinburgh, EH14 3EA, Scotland (GB)**

(74) Representative : **Szczuka, Jan Tymoteusz et al**
**Cruikshank & Fairweather 19 Royal Exchange**
**Square**
**Glasgow G1 3AE Scotland (GB)**

(54) **Platform scales.**

(57)    The present invention relates to platform scales (1) having a load platform (4) movably supported on a base means (10) via at least one load cell (5) so as to allow relative lateral and vertical displacement between the platform (4) and the base (10) during loading and unloading of the platform (4). The base means (10) comprises at least one base member (6) having side wall means. The platform (4) has depending lateral abutment means (29) disposed in closely spaced proximity to the base member side wall means (30) for interabutment therewith, in use of the scales (1). Upon excessive lateral displacement of the platform (4) there is substantially no horizontal loading of the load cell (5) so as to limit platform (4) displacement relative to the base means (10).

FIG. 2

EP 0 480 601 A1

The present invention relates to platform scales of the type having a load platform movably supported on a base via at least one load cell.

Such scales are generally used for weighing more or less heavy loads of the order of 500 to 20,000 Kg which are usually placed on the load platform by being moved sideways onto the load platform e.g. using a wheeled pallet transporter or the like. This often results in the platform being subjected to greater or lesser lateral loadings. In order to allow a limited degree of relative lateral displacement between the platform and the load cell without subjecting the load cell to any significant lateral loading and without interfering with the load cell response to the vertical loading thereon due to the weight of the load, the platform is supported by suitable means, e.g. ball-and-cup mountings between the platform and the load cell. The lateral loadings are often so large though that they are transmitted through to the base via the load cell. This can result in significant damage to or breakage of the mounting of the load cell on the base, or where a somewhat stronger mounting is used, damage to or breakage of the load cell itself.

It is an object of the present invention to avoid or minimise one or more of the above disadvantages.

The present invention provides platform scales having a load platform movably supported on a base means via at least one load cell so as to allow relative lateral and vertical displacement between the platform and the base during loading and unloading of the platform, characterised in that said base means comprises at least one base member having side wall means, and said platform has depending lateral abutment means disposed in closely spaced proximity to said base member side wall means for interabutment therewith in use of the scales upon excessive lateral displacement of the platform substantially without any horizontal loading of said load cell so as to limit platform displacement relative to the base means.

Thus with a platform scales of the invention any excessive relative lateral displacement is limited by providing for a direct interengagement between the platform and the base member before the load cells are subjected to any significant horizontal loading, thereby substantially preventing any damage to the load cells or their mountings.

Conveniently the depending lateral abutment means extend around said at least one-base member so as to limit the relative lateral displacement in substantially any direction. Generally the or each load cell extends substantially vertically between the or each respective base member and the platform radially inwardly of said lateral abutment means.

Advantageously at least one of the base member side wall means and the lateral abutment means is provided with resiliently deformable and/or displaceable buffer means for progressively resisting said relative lateral displacement, at least in an end limit position of said relative lateral displacement.

Further preferred features and advantages of the invention will appear from the following detailed description given by way of example with reference to the accompanying drawings in which:

Fig. 1 is a general sectional elevation of a platform scale of the invention; and

Fig. 2 is a detail view corresponding to part of Fig. 1 on an enlarged scale.

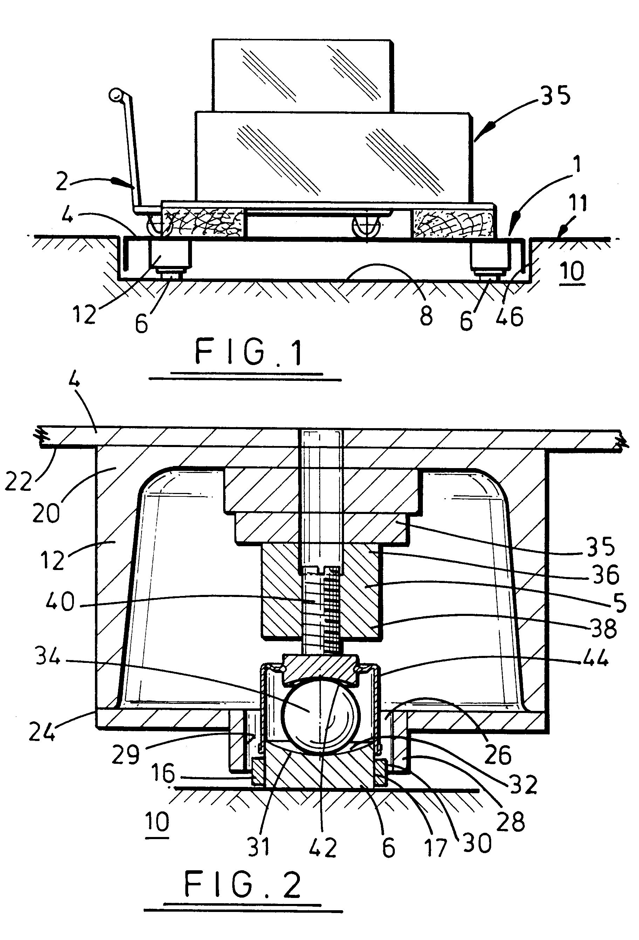

Fig. 1 shows a platform scales generally indicated by reference number 1, in use of by a loaded wheeled pallet transporter 2. The platform scales 1 comprise a load platform 4 mounted via load cells 5 (see Fig. 2) on a plurality of support members in the form of legs 6. The platform scales 1 is positioned in a recess 8 in the ground 10 to provide a more or less flush surface between the load platform 4 and the adjoining floor 11 so as to facilitate roll-on roll-off loading and unloading of pallet transporters 2.

In more detail and with reference to Fig. 2, the platform has a plurality of depending platform support portions 12 each mounted on a respective leg 6 via a load cell 5. The leg 6 is rigidly anchored to the ground 10 and is generally cylindrical with a rubber collar 16 extending therearound 17.

The platform support portion 12 is generally tubular having one end 20 secured to the underside 22 of the load platform 4. The substantially closed lower end 24 of said support portion 12 has a central aperture 26. This aperture 26 extends downwardly through a short sleeve 28 which has an inner wall 29 constituting a lateral abutment means which is disposed in close proximity around the outer side wall 30 of the leg 6 with its rubber collar 16, for interabutment therewith upon substantial lateral displacements of the platform 4.

At the top 31 of the support leg 6 is a concave depression forming a bottom cup 32 for receiving therein a spherical ball bearing 34. The platform support portion 12 has depending therefrom a mounting plate means 35 mounting the upper end 36 of the load cell 5. The lower end 38 of said load cell 5 is attached via a screwably adjustable mounting 40 to a concave surfaced top cup 42 formed and arranged for seating on top of said spherical ball bearing 34. A rubber boot 44 is connected between the top cup 42 and the bottom cup 32 substantially to enclose said ball bearing 34 and thereby to protect it from contaminants and the like.

As shown in the drawings the lateral abutment sleeve wall 29 is formed and arranged in closely spaced proximity around the rubber collar 16 so as to limit excessive lateral/horizontal displacement in any direction therebetween whilst allowing full freedom of movement vertically to permit said load cell 5 accurately to detect and measure the weight of a load 35 on the load platform 4.

It will of course be appreciated that various modifications could be made to the above described embodiment without departing from the scope of the present invention. Thus for example the abutment sleeve wall 29 and the rubber collar 16 may be of any suitable shape so as to substantially limit excessive lateral/horizontal displacement e.g. the sleeve 28 could be formed and arranged for displacement-limiting interabutment between a radially outer surface thereof with a radially inner surface of an annular leg portion (not shown).

## Claims

1. A platform scales (1) having a load platform (4) movably supported on a base means (10) via at least one load cell (5) so as to allow relative lateral and vertical displacement between the platform (4) and the base (10) during loading and unloading of the platform (4),
   characterized in that said base means (10) comprises at least one base member (6) having side wall means (30), and said platform (4) has depending lateral abutment means (29) disposed in closely spaced proximity to said base member side wall means (30) for interabutment therewith in use of the scales (1) upon excessive lateral displacement of the platform (4) substantially without any horizontal loading of said load cell (5) so as to limit platform displacement relative to the base means (10).

2. A platform scales (1) according to claim 1 wherein said base means (10) is in the form of a ground foundation.

3. A platform scales (1) according to claim 1 or claim 2 wherein said depending lateral abutment means (29) extend around said at least one base member (6).

4. A platform scales (1) according to any one of claims 1 to 3 wherein said load cell (5) extends vertically between the base member (6) and the platform (4) radially inwardly of said lateral abutment means (29).

5. A platform scales (1) according to any one of claims 1 to 4 wherein at least one of said base member side wall means (30) and said lateral abutment means (29) is provided with resiliently deformable buffer means (16).

6. A platform scales (1) according to any one of claims 1 to 5 wherein said platform (4) is supported on said base means (10) by a ball (34) and -cup (32) mounting means between said platform (4) and said load cell (5) respectively.

7. A platform scales (1) according to any one of claims 1 to 6 wherein said platform (4) is mounted in a recess (8) and the surface thereof is flush with an adjoining floor portion (11).

8. A platform scales (1) as claimed according to any one of claims 1 to 7 wherein said base member side walls means (30) and said lateral abutment means (29) are concentric.

FIG.1

FIG.2

European Patent
Office

**EUROPEAN SEARCH REPORT**

Application Number

EP    91 30 8774

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 161 103 (EGS SCALES (U.K.) LTD)<br>* page 1, line 10 - line 14 *<br>* page 4, line 3 - line 19 *<br>* page 6, line 17 - line 24; figure 3 *<br>--- | 1-4,6,7 | G01G21/23<br>G01G19/02<br>G01G21/06 |
| Y | US-A-3 490 554 (E.W. SCHELLENTRAGER)<br>* column 2, line 16 - line 38; figure 2 *<br>--- | 1-4,6,7 | |
| A | FR-A-2 088 353 (SAFELINK AB)<br>* page 7, line 11 - line 23; figures 1B,3,3A *<br>--- | 1,8 | |
| A | EP-A-0 108 164 (C. SCHENCK AG)<br>* page 6, line 15 - line 22; figure 5 *<br>--- | 5 | |
| A | FR-A-2 617 967 (F. BARRAIL)<br>* page 1, line 24 - page 2, line 8; figure C *<br>--- | 1 | |
| A | DE-A-3 907 478 (PFISTER GMBH)<br>* column 3, line 68 - column 4, line 2 *<br>* column 4, line 10 - line 18; figure 3 * | 1 | |
| | ----- | | **TECHNICAL FIELDS SEARCHED (Int. Cl.5 )**<br><br>G01G |

The present search report has been drawn up for all claims

| Place of search | Date of completion of the search | Examiner |
|---|---|---|
| THE HAGUE | 13 JANUARY 1992 | GANCI P.A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)